# EUROPEAN PATENT APPLICATION

(11) **EP 2 255 613 A1**
(43) Date of publication of application: **01.12.2010**
(21) Application number: 10163226.3
(22) Date of filing: 19.05.2010
(51) Int. Cl.: A01G 27/00

(54) **Self watering insert**

(30) Priority: 20.05.2009 DK 200900639
(71) Applicant: BØG MADSEN HOLDING A/S, 5250 Odense SV (DK)
(72) Inventor: Madsen, Jens Bøg, 5230, Odense M (DK)
(74) Representative: Gregersen, Niels Henrik

(57) **Abstract**

The present invention concerns a self-watering insert for supplying at least water to a pot plant in a pot, including utility as well as ornamental plants, where the self-watering insert is intended for disposition in a flowerpot bowl under the pot, where the self watering insert at least includes a spacer member and a platform member upon which a pot is resting. The self-watering insert may advantageously be formed in one piece, preferably of a plane sheet material, where the self-watering insert is provided with a height adjustable spacer member. Such a self-watering insert can be moulded in a relatively simple mould or be punched or cut out of a sheet or web material. By making the self-watering insert with a height adjustable spacer member, there is achieved the advantage that an insert may be adapted to certain pots and plants according to need. A pot may be arranged on the platform member at a given level in a flowerpot bowl and a water reservoir under the platform member may also be adapted in size by adjusting the height adjustable spacer member.

## Description

### Field of the Invention

The present invention concerns a self-watering insert for supplying at least water to a pot plant in a pot, including utility as well as ornamental plants, where the self-watering insert is intended for disposition in a flowerpot bowl under the pot, where the self watering insert at least includes a spacer member and a platform member upon which a pot is resting, and where the self-watering insert is formed as an integral part of a plane sheet material.

### Background of the Invention

It is commonly known to use different solutions in connection with automatic watering of plants in pots. Plants are typically provided in pots in connection with cultivation in greenhouses, and on the way to the end user, these plants are stored in pots, e.g. in trays with twelve pots in each tray. The trays are often with openings at the bottom such that they may be put on a table with sides and upon which water may be let out. The plant may thus suck water via its roots through openings in trays and pots. This is a brilliant way of supplying water to the pot plants; however, the method is not very well suited for application when the pot plants are taken out of the trays or when they are stored in trays in e.g. shops or similar where there are no tables upon which the plants can be watered.

It is thus a challenge to ensure that the plants get enough water during their stay in the trays in the shops and also afterwards at the individual consumer.

At the consumer there is often used flowerpot bowls in which watering is performed regularly. In order to avoid watering so often, so-called self-watering pots are used in which water is sucked via one or more wicks from a water container which is typically disposed under the pot and roots of the plant itself. Such self-watering pots are known in many sizes and are very often used in office and business premises where the plants are regularly attended to by a gardener. By such pots with integrated water container it is only necessary to attend to the plants every second week or the like, which is very practical and desirable. However, these self-watering pots are not always used, partly because they are expensive and partly because they do not always fit the design taste of the consumer.

### Object of the Invention

It is the purpose of the invention to indicate a solution to the above problem where the solution is cheap and usable in common flowerpot bowls which the customer may already have acquired, and where it is only necessary with water supply to the pot plants at suitably long intervals.

### Description of the Invention

As mentioned above, the invention concerns a self-watering insert for supplying a least water to a pot plant in a pot. The self-watering insert according to the invention may advantageously be formed in one piece of a plane sheet material, where the self watering insert includes a height adjustable spacer member that includes means for adjustment to three or more levels. By making the self-watering insert in one piece, preferably in a plane piece, the product may readily be packed and shipped. Another advantage is that the self-watering insert can be moulded in a relatively simple mould or be punched or cut out of a sheet or web material. By making the self-watering insert with a height adjustable spacer member, there is achieved the advantage that an insert may be adapted to certain pots and plants according to need. A pot may be arranged on the platform member at a given level in a flowerpot bowl and a water reservoir under the platform member may also be adapted in size by adjusting the height adjustable spacer member. Adaptation of the height adjustable member itself may typically be effected by the said means for height adjustment being embossings in respective spacer members, indicating and facilitating uniform bending or cutting of the individual spacer members. By providing these spacer members with markings for bending and/or cutting, a uniform length of the height adjustable spacer members is ensured.

At the same time, by one single type/size of self-watering insert there is achieved a good and easily adaptable solution allowing for different pot sizes in uniform flowerpot bowls, or vice versa.

Similarly, different types of plants may have various needs for the amount of water added and with a self-watering insert according to the invention, the size of the water reservoir under the platform part may readily be adapted to specific needs.

In a preferred variant of a self-watering insert according to the invention, the platform member may include a central part and a peripheral part, where a number of tabs project from the central part and form the periphery of the peripheral part at the platform part. Hereby is achieved possibility of adapting the platform part to flowerpot bowls of different sizes. Typically, a self-watering insert may be designed with a circular platform member where slits are provided along the periphery, pointing to the centre and thereby forming a number of tabs between these slits. By such a solution, the self-watering insert may be used for flowerpot bowls with diameters that are larger that that of the platform member, and in that the tabs are e.g. bent up along the inner surface in the flowerpot bowl, it may be used for lesser diameters corresponding to the central part of the self-watering insert.

In one variant of the invention, a given spacing may exist between the tabs, meaning that only part of the periphery of a self-watering insert may be in contact - or nearly in contact - with the inner surface of a flowerpot bowl.

A particularly preferred variant of a self-watering insert according to the invention is where the spacer member is constituted by three or four legs, the legs extending in a plane from the platform part and being adjustable in length, preferably by manual adaptation. The legs extend e.g. out between the previously mentioned tabs and may, as mentioned, be adapted in length, either by bending, breaking off, cutting off or shearing off a suitable length. It may e.g. be effected in relation to printed or in other ways provided markings on the individual legs. A preferred variant is provided with embossings at every five millimetres. Thus there is a large degree of adaptation options and a self-watering insert may therefore be adapted to exactly the actual flowerpot bowl.

In order that a self-watering insert according to the invention may operate, it is obviously required that it includes one or more water absorbing and water conducting elements. For example, one or more strips of paper, felt, non-woven or another similar material may be applied. The strip is to be arranged such that it extends from the platform member of the self-watering insert and down to the bottom of the flowerpot bowl.

In a particularly preferred embodiment of a self-watering insert according to the invention, at least the spacer member and part of the platform member, preferably the entire self-watering insert, are made from a laminated sheet material, where at least one of the layers in the laminated sheet material is water absorbing and water conducting. Hereby is achieved the obvious advantage that the self-watering insert may readily be placed in a flowerpot bowl and operate. For example, the self-watering insert can be made of a plastic material which is laminated together with a layer of e.g. paper fibres or other types of fibres that may conduct water to the platform member and thereby to the bottom of the pot, where the roots of the plant may suck up the conducted water or nutrient. In this connection, the term laminated is meant as a term for a material joined with another material, the jointing being either an actual mechanical attachment or not. It may e.g. be layers that are joined but may also be layers applied by a spraying device, a brush or in other ways.

A self-watering insert according to the invention may advantageously include one or more indicators for e.g. water, fertiliser or salt content in the flowerpot bowl and/or in the pot. This may e.g. be a colour indication which in principle is a leg on the self watering insert pointing up relative to the platform member where the other legs are pointing downwards. The length of the indicator may be adapted in the same way as the legs and may in this way be designed such that a greater or smaller part is visible at the upper edge of flowerpot bowls. The indicator itself may operate in that moisture, fertiliser and/or salt act on the indicator material so as to appear with one or more colours, depending on the individual condition. There may e.g. be one or more indicators, each intended for indication of a certain condition.

Another and slightly more advanced self-watering insert according to the invention may be with an indicator that operates by emitting a given sound or light signal, where the signal is activated by lacking electric connection or a ohmic resistance appearing outside a given interval. In this way, an acoustic signal or a light signal may indicate lack of water in a given flowerpot bowl. Such a solution may of course be supplied with energy from the public network, a battery, via solar panels or combinations thereof.

The invention further includes a machine for mounting a self-watering insert where the machine is adapted for automatic positioning of a self-watering insert in a tray or a flowerpot bowl. By such a machine it is possible to achieve high capacity during packing of plants, either in trays or in flowerpot bowls before delivery to the customer. Such a machine will typically be used in connection with large garden centres or by wholesalers within the industry.

A variant of a machine according to the invention is where the machine is adapted with means for adapting the leg length of a self-watering insert before placing a self-watering insert in a tray or in a flowerpot bowl. By this technical feature it is possible to adapt the leg length on the used self-watering inserts such that a standard self-watering insert can be applied, where the leg length is adapted to the various needs.

By a product according to the invention, a much better durability of the plant is achieved as well as a lesser work load for the consumer handling pots with plants. The product can be sold and used together with new flowerpot bowls, but is also suited for retrofitting in flowerpot bowls already in use, whereby increased freedom in using all types of flowerpot bowls as self-watering pots is achieved.

By making self-watering inserts according to the invention with suitable dimensions, they may be used in a plurality of flowerpot bowls on the market.

### Description of the Drawing

The invention is described in the following with reference to the drawing, wherein:
- Fig. 1: shows a self-watering insert in plane form.
- Fig. 2: shows a self-watering insert mounted in a pot.
- Fig. 3: shows a self-watering insert with indicator.

### Detailed Description of Embodiments of the Invention

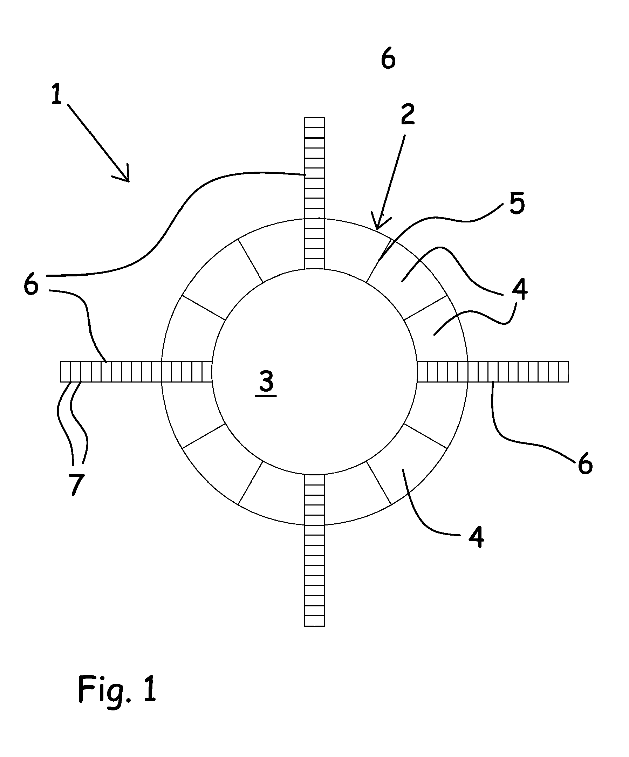

In fig. 1 appears a self-watering insert 1 in plane form. It is preferably moulded or cut/punched from plastic or other material with sufficient stiffness and which is not dissolved or loses its rigidity when the material comes in contact with moisture. The self-watering insert 1 is seen here in a variant with a platform member 2 that includes a central part 3 and a number of tabs 4 separated by slits 5. The spacer member is constituted by four legs 6 which are disposed symmetrically along the periphery of the central part 3. In the same way, the tabs 4 are formed symmetrically along the periphery of the central part 3. Embossings 7 are provided on the legs 6 with suitable spacing whereby the work of adjusting the leg length is considerably facilitated. The shown variant is provided with a circular platform part 2 and with four legs 6, and such a variant may be used in circular, oval or edged flowerpot bowls, as all or some of the tabs 4 will just rest more or less against the inner side of the actual flowerpot bowl.

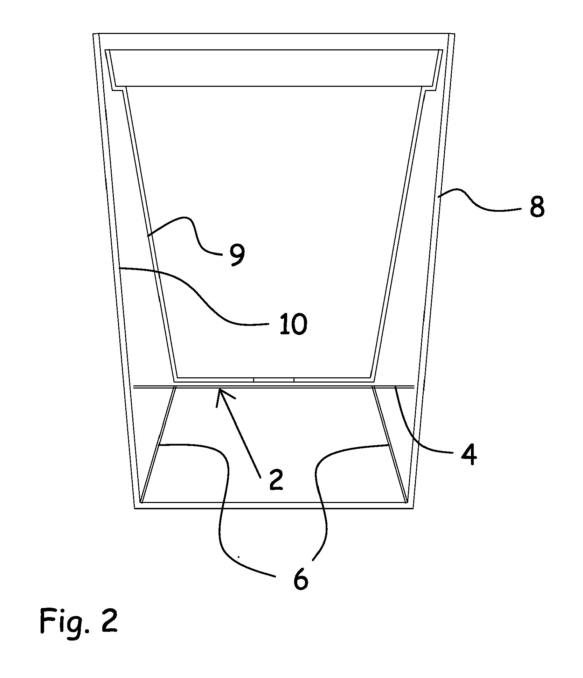

In Fig. 2 appears a cross-section of a flowerpot bowl 8 in which is mounted a self-watering insert 1. Upon this self-watering insert 1, a pot 9 with a not shown plant is placed. In the shown variant, the self-watering insert 1 is provided with a platform member 2 with lesser diameter than the flowerpot bowl 8 on the place in question. The legs 6 of the self-watering insert 1 therefore stand in an inclining position against the inner side 10 of the flowerpot bowl 8.

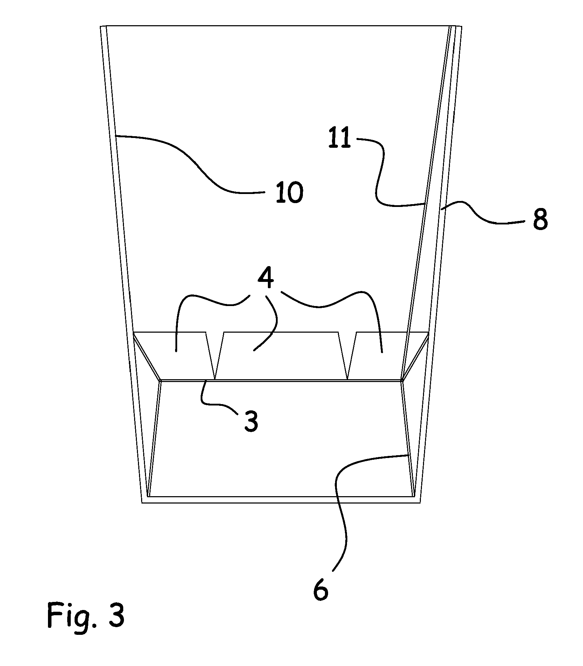

In Fig. 3 appears yet a cross-section of a flowerpot bowl 8 in which is mounted a self-watering insert 1 with a platform member 2 with a diameter that is greater than the actual diameter in the flowerpot bowl 8. Therefore, the self-watering insert 1 has tabs 4 resting on the side 10 of the flowerpot bowl 8. Furthermore is seen an indicator 11 extending along the inner side 10 of the flowerpot bowl 8. The indicator 11 may in principle be one of the legs 6 but may also be a special part with a specially adapted design. The length of the indicator 11 may be adapted in the same way as the length of the legs 6, namely by means of tools or by breaking off the leg in a suitable length.

As mentioned above, conducting water from a reservoir under the platform member 2 may be effected by a loose absorbing and liquid conducting strip or similar. Such a strip is only to be disposed such that it extends from the bottom of the flowerpot bowl 8 or from an area close to the bottom and to the platform member 2. However, the preferred solution is that an absorbing and conducting layer is laminated together with the self-watering insert 1 itself.

The invention is not limited to the above described embodiments and not to the embodiments shown in the drawings either, but may be supplemented and modified in any way according to the invention as specified and defined in the claims.

## Claims

1. A self-watering insert for supplying at least water to a pot plant in a pot, where the self-watering insert is intended for disposition in a flowerpot bowl under the pot, where the self-watering insert at least includes a spacer member and a platform member upon which a pot is resting, where the self-watering insert is formed as an integral part of a flat sheet material, **characterised in that** the self watering insert includes a height adjustable spacer member, where the height adjustable spacer member includes means for adjustment to three or more levels.

2. Self-watering insert according to claim 1, **characterised in that** the platform member includes a central part and a peripheral part, where a number of tabs project from the central part and form the periphery of the peripheral part at the said platform part.

3. Self-watering insert according to any of claims 1 and 2, **characterised in that** the spacer member is constituted by three or four legs, the legs extending in a plane from the platform part and being adjustable in length, preferably by manual adaptation.

4. Self-watering insert according to any of claims 1 to 3, **characterised in that** the self-watering insert includes one or more water absorbing and water conducting elements.

5. Self-watering insert according to any of claims 1 to 4, **characterised in that** at least the spacer member and part of the platform member are made from a laminated sheet material, where at least one of the layers in the laminated sheet material is water absorbing and water conducting.

6. Self-watering insert according to any of claims 1 to 5, **characterised in that** the self-watering insert includes an indicator for e.g. water, fertiliser or salt contents in the flowerpot bowl and/or in the pot.

7. Self-watering insert according to claim 6, **characterised in that** the indicator operates by indicating a given colour on an indicator area.

8. Self-watering insert according to claim 6, **characterised in that** the indicator operates by emitting a given sound or light signal, where the signal is activated by lacking electric connection or a ohmic resistance present outside a given interval.

9. A machine for mounting a self-watering insert according to any of claims 1 to 8, **characterised in that** the machine is adapted for automatic positioning of a self watering insert in a tray or in a flowerpot bowl.

10. Machine according to claim 9, **characterised in that** the machine is adapted with means for adapting the leg length of a self-watering insert before placing a self watering insert in a tray or in a flowerpot bowl.
